# EUROPÄISCHE PATENTSCHRIFT

(11) **EP 3 429 894 B1**
(45) Veröffentlichungstag und Bekanntmachung des Hinweises auf die Patenterteilung: **16.10.2019**
(21) Anmeldenummer: 17711604.3
(22) Anmeldetag: 14.03.2017
(51) Int. Cl.: B60R 19/18, B60R 21/34

(54) **DEFORMATIONSSTRUKTUR UND FUSSGÄNGERSCHUTZVORRICHTUNG MIT EINER DEFORMATIONSSTRUKTUR**
DEFORMATION STRUCTURE AND PEDESTRIAN PROTECTION DEVICE HAVING A DEFORMATION STRUCTURE
STRUCTURE À DÉFORMATION ET DISPOSITIF POUR LA PROTECTION DES PIÉTONS AVEC UNE STRUCTURE À DÉFORMATION

(30) Priorität: 15.03.2016 DE 102016204264
(43) Veröffentlichungstag der Anmeldung: 23.01.2019
(73) Patentinhaber: Bayerische Motoren Werke Aktiengesellschaft, 80809 München (DE)
(72) Erfinder: AKIF, Öztzan, 80937 München (DE); FICHTINGER, Gerhard, 85630 Grasbrunn (DE); NADERER, Simon Konrad, 87545 Burgberg (DE); RIEDL, Wilhelm, 85276 Pfaffenhofen (DE)
(86) Internationale Anmeldenummer: PCT/EP2017/055904
(87) Internationale Veröffentlichungsnummer: WO 2017/157886

(56) Entgegenhaltungen:
- WO-A1-2009/116395
- DE-U1-202009 016 759
- FR-B1- 2 729 621
- US-A- 4 890 877
- US-A1- 2007 200 376

## Beschreibung

Die vorliegende Erfindung bezieht sich auf eine Deformationsstruktur und auf eine Fußgängerschutzvorrichtung mit einer Deformationsstruktur, die zwischen einem Karosserieaußenhautelement und einem Karossiereträgerelement angeordnet ist.

Ein bekannter Vorderwagen eines Kraftfahrzeugs hat beispielsweise einen Stoßfängerquerträger, der an vorderen Enden von Längsträgern befestigt ist, und eine Stoßfängerverkleidung, wobei zwischen der Stoßfängerverkleidung und dem Stoßfängerquerträger zum Schutz von Fußgängern ein weicher, auf einem vergleichsweise niedrigen Lastniveau verformbarer Schaum angeordnet ist. Der weiche Schaum ist aufgrund eines Fußgängerschutzes angeordnet, um einen Fußgänger gegebenenfalls vor einer direkten unmittelbaren Kollision mit einer harten, steifen Struktur des Kraftfahrzeugs, wie beispielsweise dem Stoßfängerquerträger, zu schützen.

Des Weiteren gibt es ein Erfordernis, dass in einem sehr niedrigen Geschwindigkeitsbereich von bis zu beispielsweise 4 km/h, in dem der Fußgängerschutz aufgrund der geringen Geschwindigkeit nicht relevant ist, das Kraftfahrzeug bei einer Kollision schadensfrei bleibt.

Darüber hinaus gibt es bei einer etwas höheren Geschwindigkeit, die ebenfalls noch nicht für den Fußgängerschutz relevant ist, das Erfordernis, dass ein Schaden bei einer Kollision möglichst klein ist und beispielsweise eine Kühlerstruktur, die sich in dem Vorderwagenbereich befindet, nicht beschädigt wird. Hierfür wäre hilfreich, wenn die Struktur, die sich vor dem Stoßfängerquerträger befindet, bereits hinreichende Absorptionsfähigkeit von Kollisionsenergie aufweist.

Die verschiedenen Anforderungen stehen zum Teil im Gegensatz zueinander und erfordern am Fahrzeugbug einen vergleichsweise langen Fahrzeugüberhang und damit ein höheres Gewicht und eine nachteilige Beeinflussung der Fahrdynamik. Zum Lösen der daraus entstehenden Zielkonflikte wurde beispielsweise in der DE 102010054641 A1 eine Stoßfängeranordnung mit einem Querträger vorgeschlagen, der über Crashboxen an der Fahrzeugkarosserie befestigt ist. In Fahrtrichtung vor dem Querträger ist ein Fußgängerschutzelement für einen weichen Anprall eines Fußgängers ausgebildet. Zusätzlich ist ein schwenkbares Energieabsorptionselement vorgesehen, das vor das Fußgängerschutzelement verschwenkbar ist und hierdurch eine erhöhte Energieabsorption bei Kollisionen ermöglicht, bei denen eine höhere Kollisionsenergieabsorptionsfähigkeit der Crashstruktur des Kraftfahrzeugs erforderlich ist.

Die DE 102012112636 A1 zeigt ebenfalls eine Stoßfängeranordnung mit einem Stoßfängerquerträger und einem Fußgängerschutzelement, das von einem steifen Zustand in einen vergleichsweise weichen Zustand, der einem Fußgängerschutz dient, mittels eines Aktuators umgeschaltet werden kann. Die DE 202009016759 U1 offenbart eine Deformationsstruktur nach dem Oberbegriff des Anspruchs 1.

Den in der DE 102010054641 A1 und der DE 102012112636 A1 beschriebenen Stoßfängeranordnungen ist gemeinsam, dass hierfür eine Crash- bzw. Pre-Crash-Sensorik erforderlich ist, wobei auf Grundlage der Ausgangssignale der Sensorik zwischen einem harten, steifen Zustand der Crashstruktur mit hoher Kollisionsenergieabsorptionsfähigkeit und einem weichen Zustand der Crashstruktur mit zu Gunsten des Fußgängerschutzes geringer Kollisionsenergieabsorptionsfähigkeit umgeschaltet werden kann.

Es ist daher die Aufgabe der vorliegenden Erfindung, eine Deformationsstruktur und eine Fußgängerschutzvorrichtung mit der Deformationsstruktur für ein Kraftfahrzeug zu schaffen, die abhängig von einem Lastfall auf unterschiedlichen Energieniveaus verformbar ist, dabei einfach aufgebaut ist und unabhängig von einer Sensorik bzw. einem Aktuator funktioniert.

Diese Aufgabe wird durch eine Deformationsstruktur gelöst, die die Merkmale von Patentanspruch 1 aufweist. Vorteilhafte Ausgestaltungen der Erfindung sind in den abhängigen Patentansprüchen genannt.

Eine erfindungsgemäße Deformationsstruktur, die auch Energieabsorptionsstruktur genannt werden kann, hat zumindest eine erste Lage und eine zweite Lage, die in Deformationsrichtung bzw. Lastrichtung zueinander beabstandet und zueinander verlagerbar angeordnet sind. Die erste Lage und die zweite Lage weisen komplementäre Vorsprünge und Vertiefungen auf, die derart ausgebildet sind, dass die Vorsprünge der ersten Lage und Vertiefungen der zweiten Lage sowie die Vorsprünge der zweiten Lage und Vertiefungen der ersten Lage ineinander eintauchbar sind. Die erste Lage und die zweite Lage sind über verformbare Stegelemente derart miteinander verbunden, dass bei einem hohen Impuls in Deformationsrichtung die Vorsprünge der ersten Lage in die Vertiefungen der zweiten Lage sowie die Vorsprünge der zweiten Lage in die Vertiefungen der ersten Lage eintauchen, so dass eine Verformung der Deformationsstruktur in Deformationsrichtung auf einem verhältnismäßig niedrigen Kraftniveau erfolgt, und bei einem niedrigen Impuls in Deformationsrichtung die Vorsprünge der ersten Lage auf die Vorsprünge der zweiten Lage treffen, so dass eine weitere Verformung der Deformationsstruktur in Deformationsrichtung auf einem verhältnismäßig hohen Kraftniveau erfolgt.

Hierdurch ist es möglich eine Deformationsstruktur bereitzustellen, die abhängig von einem Lastfall, d.h. einem Kollisionsimpuls, auf unterschiedlichen Energieniveaus verformbar ist und damit unterschiedliche Steifigkeiten aufweist. Das "Umschalten" zwischen den zwei Steifigkeiten erfolgt dabei unabhängig von einer Sensorik bzw. einem Aktuator selbsttätig. Die Einstellung der Steifigkeiten wird dabei durch eine bestimmte geometrisch komplementäre Gestalt der ersten Lage und der zweiten Lage und die Verbindung der Lagen über die Verbindungselemente bewirkt.

Gemäß einer Weiterbildung sind die erste Lage und die zweite Lage durch Verformung der Stegelemente ferner in eine Richtung parallel zueinander verlagerbar.

Insbesondere können bei der Deformationsstruktur die Stegelemente derart ausgebildet sein, dass sie bei dem hohen Kollisionsimpuls spröde und/oder plastisch versagen und wobei die Stegelemente bei dem niedrigen Kollisionsimpuls entsprechend einem Filmscharnier wirken.

Die als Filmscharnier ausgebildeten Stegelemente können dabei eine Schwenkbewegung der ersten Lage und der zweiten Lage zueinander bewirken, bei der die erste Lage und die zweite Lage parallel zueinander sowie in Deformationsrichtung, also aufeinander zu, verlagert werden.

Hierdurch ist eine definierte Schwenkbewegung der ersten Lage und der zweiten Lage aufeinander zu möglich und die steifigkeitserhöhende Stellung der ersten Lage und der zweiten Lage zueinander zuverlässig einnehmbar.

Bei dem hohen Kollisionsimpuls verhindert das Versagen der Stegelemente die Schwenkbewegung der ersten Lage und der zweiten Lage zueinander. Die erste Lage und die zweite Lage werden wegen des Versagens der Stegelemente im Wesentlichen ohne seitliche Ausweichbewegung lediglich in Deformationsrichtung aufeinander zu verlagert.

Gemäß einer bevorzugten Weiterbildung sind die Stegelemente als Wandelemente bzw. Flächenelemente ausgebildet, die sich in Breitenrichtung der ersten Lage und der zweiten Lage erstrecken. Insbesondere können sich dabei die Stegelemente über eine gesamte Breite der Deformationsstruktur erstrecken.

Bevorzugt sind bei der erfindungsgemäßen Deformationsstruktur die erste Lage und die zweite Lage im Wesentlichen identisch ausgebildet bzw. geformt.

Dies erleichtert eine Herstellung der Deformationsstruktur. Ferner sind hierdurch komplementäre Vorsprünge und Vertiefungen auf einfache Weise möglich.

Gemäß einer bevorzugten Weiterbildung der Deformationsstruktur sind die Vorsprünge der ersten Lage und die Vertiefungen der zweiten Lage sowie die Vertiefungen der ersten Lage und die Vorsprünge der zweiten Lage in einer Ausgangslage der Deformationsstruktur einander gegenüberliegend angeordnet. Hierdurch kann die Deformationsstruktur bei einem niedrigen Kollisionsimpuls auf einem verhältnismäßig niedrigen Kraftniveau in Deformationsrichtung verformt werden.

Die Deformationsstruktur kann bevorzugt aus einem Kunststoffmaterial ausgebildet sein.

Hierdurch kann die Deformationsstruktur leicht und korrosionsbeständig ausgeführt werden.

Die Deformationsstruktur kann hierbei bevorzugt einstückig ausgebildet sein.

Hierdurch ist eine Herstellung vereinfacht und eine Zahl an Bauteilen ist hierdurch besonders gering.

Die Herstellung der Deformationsstruktur aus Kunststoff, insbesondere der einstückigen Deformationsstruktur, kann beispielsweise durch Extrusion oder durch ein additives Herstellungsverfahren erfolgen.

Hierdurch ist die Deformationsstruktur besonders effizient bei geringen Kosten herstellbar.

Gemäß einer besonders bevorzugten Weiterbildung sind die erste Lage und die zweite Lage jeweils in Form einer gewellten Platte ausgebildet. Wellenberge und Wellentäler bilden dabei die Vorsprünge und Vertiefungen.

Die Vorsprünge und Vertiefungen (Wellenberge und Wellentäler) können bevorzugt eine trapezförmige Gestalt aufweisen.

Durch diese geometrische Gestalt sind die Vorsprünge und Vertiefungen der gegenüberliegenden Lagen leicht ineinander verschiebbar.

Die Deformationsstruktur gemäß der vorliegenden Erfindung kann eine Vielzahl von Lagen aufweisen, wobei zwei benachbarte Lagen jeweils eine erste Lage und eine zweite Lage bilden. Beispielsweise kann die Deformationsstruktur drei, vier, fünf, sechs oder mehr Lagen aufweisen.

Gemäß einer bevorzugten Weiterbildung der Deformationsstruktur sind die Verbindungsstege in einem Lagenzwischenraum zweier benachbarter Lagen angeordnet und die Verbindungsstege zweier benachbarter Lagenzwischenräume sind hinsichtlich ihrer Verlagerungswirkung in entgegengesetzte Richtungen orientiert. Mit Verlagerungswirkung ist dabei beispielsweise eine Schwenkbewegung in entgegengesetzte Richtungen gemeint.

Hierdurch soll eine gleichmäßige Verformung der Deformationsstruktur mit der Vielzahl von Lagen bei dem niedrigen Kollisionsimpuls erzielt werden.

Die vorliegende Erfindung betrifft auch eine Fußgängerschutzvorrichtung für ein Kraftfahrzeug mit einer erfindungsgemäßen Deformationsstruktur. Hierbei ist die Deformationsstruktur bevorzugt zwischen einem Fahrzeugaußenhautelement und einem Karosserieträgerelement angeordnet.

Die Deformationsstruktur stützt sich dabei bei einem Kollisionsimpuls an dem Karosserieträgerelement ab.

Das Fahrzeugaußenhautelement kann eine Stoßfängerverkleidung sein. Das Karosserieträgerelement kann ein Stoßfängerquerträger sein.

Durch die erfindungsgemäße Fußgängerschutzvorrichtung mit der Deformationsstruktur ist keine Kollisionssensorik und keine Aktuatorik notwendig, um gegebenenfalls einen mechanischen Mechanismus aktiv zu verriegeln oder zu entriegeln und damit zwischen einer Struktur mit einem "weichen" Deformationsverhalten und einem "steifen" Deformationsverhalten bedarfsweise umschalten zu können. Die erfindungsgemäße Fußgängervorrichtung mit der Deformationsstruktur wirkt selbsttätig abhängig von einem Kollisionsimpuls, der wiederum von einem Kollisionsgeschwindigkeit des Kraftfahrzeugs abhängt. Die Deformationsrichtung ist insbesondere eine Kollisionsrichtung und ist bei der Anwendung zum Fußgängerschutz im Kraftfahrzeugbug im Wesentlichen eine Fahrzeuglängsrichtung.

Grundsätzlich erstreckt sich der Schutzbereich der erfindungsgemäßen Deformationsstruktur jedoch auch auf alle anderen Anwendungsbereiche im Kraftfahrzeugbereich oder auch anderen Technologiefeldern, bei denen eine Verformbarkeit einer Deformationsstruktur auf unterschiedlichen Lastniveaus abhängig von einem Lastfall erforderlich ist.

Demnach erfolgt bei dem niedrigen Kollisionsimpuls und damit der niedrigen Kollisionsgeschwindigkeit des Kraftfahrzeugs ein Verschwenken der gegenüberliegenden Lagen derart, dass sich die Vorsprünge der gegenüberliegenden Lagen gegenüberliegen und aufeinander abstützen. Die Deformationsstruktur wirkt demnach steif. Bei dem hohen Kollisionsimpuls und damit der hohen Kollisionsgeschwindigkeit erfolgt kein Verschwenken der gegenüberliegenden Lagen, so dass die gegenüberliegende Vorsprünge und Vertiefungen der gegenüberliegenden Lage ineinander verlagerbar sind. Damit reagiert die Deformationsstruktur über eine längere Verformungsstrecke weicher.

Beispielsweise kann die Fußgängerschutzvorrichtung derart ausgebildet sein, dass bei einem Kollisionsimpuls, der bis zu einer Schwellwertgeschwindigkeit des Kraftfahrzeugs erzeugt wird, die Deformationstruktur steifer reagiert und bei einer höheren Kraft verformt wird. Damit kann bei der geringen Kollisionsgeschwindigkeit eine Kollisionslast auf das dahinterliegende Karosserieelement übertragen werden - bei einer sehr geringen Geschwindigkeit - oder es erfolgt zum Schutz dahinterliegender Bauteile eine hinreichende Energieabsorption durch die Deformationsstruktur - bei einer etwas höheren Geschwindigkeit, die jedoch unterhalb der Schwellwertgeschwindigkeit ist. In jedem Fall können damit die Reparaturkosten verringert werden, wobei insbesondere bei der sehr geringen Geschwindigkeit - beispielsweise bei sogenannten Parkremplern - die Reparaturkosten gegebenenfalls auf das Ausbessern von beispielsweise Lackschäden begrenzt werden kann.

Die Schwellwertgeschwindigkeit kann beispielsweise 20 km/h oder dergleichen betragen.

Ferner kann die Fußgängerschutzvorrichtung derart ausgebildet sein, dass bei einem Kollisionsimpuls, der ab einschließlich der Schwellwertgeschwindigkeit des Kraftfahrzeugs erzeugt wird, die Deformationsstruktur weicher reagiert und bei einer geringeren Kraft verformt wird. Dies ist bei der frontalen Kollision des Fußgängers mit dem Kraftfahrzeug ab der Schwellwertgeschwindigkeit besonders vorteilhaft, da hierbei geringere Kollisionskräfte auf den Fußgänger wirken.

Vorstehend aufgeführte Weiterbildungen der Erfindung können soweit möglich und sinnvoll beliebig miteinander kombiniert werden.

Es folgt eine Kurzbeschreibung der Figuren.
Fig. 1 zeigt schematisch in einer Perspektivansicht eine Deformationsstruktur gemäß einem Ausführungsbeispiel der vorliegenden Erfindung.
Fig. 2 zeigt schematisch in einer Seitenansicht die Deformationsstruktur gemäß dem Ausführungsbeispiel der vorliegenden Erfindung.
Figuren 3a bis 3c zeigen schematisch in einer Seitenansicht eine kleinste Einheit der Deformationsstruktur gemäß dem Ausführungsbeispiel der vorliegenden Erfindung in einem Kollisionslastfall mit einem niedrigen Kollisionsimpuls.
Figuren 4a bis 4c zeigen schematisch in einer Seitenansicht die kleinste Einheit der Deformationsstruktur gemäß dem Ausführungsbeispiel der vorliegenden Erfindung in einem Kollisionslastfall mit einem hohen Kollisionsimpuls.
Figuren 5 und 6 zeigen schematisch in einer Seitenansicht die Deformationsstruktur gemäß dem Ausführungsbeispiel von Fig. 2 in einem Kollisionslastfall mit einem hohen Kollisionsimpuls.
Figuren 7 bis 9 zeigen schematisch in einer Seitenansicht die Deformationsstruktur gemäß dem Ausführungsbeispiel von Fig. 2 in einem Kollisionslastfall mit einem niedrigen Kollisionsimpuls.
Figuren 10 bis 12 zeigen weitere Ausführungsbeispiele einer Deformationsstruktur gemäß der vorliegenden Erfindung mit anderen Verbindungsstegen.

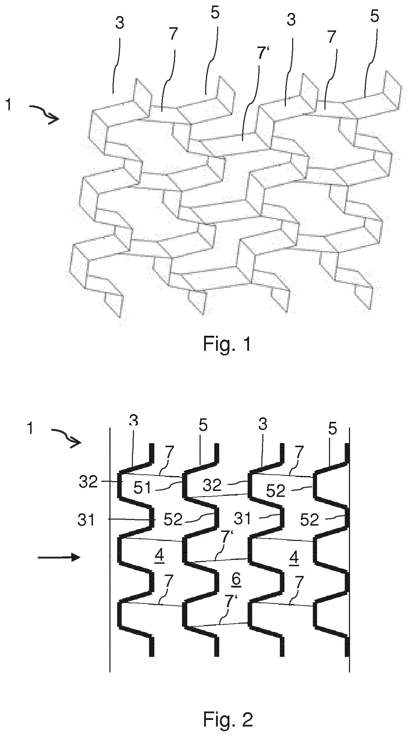

Im Folgenden sind Ausführungsbeispiele der vorliegenden Erfindung unter Bezugnahme auf Figuren 1 bis 12 beschrieben.

Figur 1 zeigt in einer perspektivischen Ansicht eine Deformationsstruktur 1 gemäß einem Ausführungsbeispiel der vorliegenden Erfindung. Die Deformationsstruktur 1 ist an einem Frontend eines Kraftfahrzeugvorderwagens, insbesondere einem Kraftfahrzeugbug, vor einem nicht gezeigten Stoßfängerquerträger an Stelle eines bekannten Fußgängerschutzschaums montiert. Insbesondere ist die Deformationsstruktur 1 in einem Raum zwischen einer Fahrzeugaußenhaut, das heißt einer Stoßfängerverkleidung, und dem Stoßfängerquerträger angeordnet.

Wie in Figur 1 gezeigt ist, hat die Deformationsstruktur 1 eine Reihe hintereinander angeordneter Lagen 3, 5, 3, 5. Die Lagen 3, 5, 3, 5 sind zueinander beabstandet und über Verbindungsstege 7, 7', die Stegelemente gemäß der vorliegenden Erfindung bilden, miteinander verbunden. Die Lagen 3, 5, 3, 5 sind in Form von trapezförmig gewellten Platten ausgeführt. Die Lagen 3, 5, 3, 5 sind hier mit einer relativ geringen Tiefe dargestellt, können sich gegebenenfalls über eine gesamte Fahrzeugbreite erstrecken.

In Figur 2 ist eine Seitenansicht der Deformationsstruktur 1 gezeigt, wobei eine Deformationsrichtung der Deformationsstruktur 1 in der Figur 2 von links nach rechts verläuft und durch einen Pfeil dargestellt ist. Die Deformationsrichtung ist in diesem Fall eine Fahrzeuglängsrichtung. Eine Hochrichtung in der Zeichenebene kann bevorzugt einer Fahrzeughochrichtung oder eine Fahrzeugquerrichtung entsprechen. In dieser Deformationsrichtung weist die Deformationsstruktur 1 seine Deformationsfunktion auf. Auf der linken Seite ist hierbei insbesondere eine Stoßfängerverkleidung und auf der rechten Seite ein Stoßfängerquerträger angeordnet. Die Lagen 3, 5, 3, 5 haben einen im Wesentlichen identischen Aufbau. Eine erste Lage 3 von rechts besteht aus einander abwechselnden Vorsprüngen 31 und Vertiefungen 32, die jeweils trapezförmig ausgebildet sind. Ebenso besteht die zweite Lage 5 von rechts aus einander abwechselnden Vorsprüngen (Wellenberge) 51 und Vertiefungen (Wellentäler) 52. Daran schließen sich zwei weitere Lagen 3 und 5 an. Zwei benachbarte Lagen 3 und 5 sind beabstandet zueinander angeordnet und mit Verbindungsstegen 7, 7' miteinander verbunden. Die Verbindungsstege 7, 7' sind im Falle einer Last, die in Deformationsrichtung wirkt, deformierbar ausgebildet.

Die Deformationsstruktur 1 ist bevorzugt aus einem Kunststoffmaterial hergestellt, wodurch die Deformationsstruktur 1 kostengünstig hergestellt werden kann und hinreichend leicht ausgebildet werden kann. Insbesondere kann die Deformationsstruktur 1 mittels eines additiven Fertigungsverfahrens oder eines Extrusionsverfahrens in einem Stück hergestellt werden. Alternativ könnten die Lagen 3, 5 auch getrennt hergestellt werden und anschließend mittels eines geeigneten Verfahrens über die Stege miteinander verbunden werden. Die Stege könnten beispielsweise nachträglich anextrudiert werden.

Die Lagen könnten alternativ auch aus einem metallischen Werkstoff, beispielsweise Aluminium oder eine Aluminiumlegierung, hergestellt sein und dann in einem weiteren Verfahrensschritt über ein Extrusionsverfahren mit den Stegen verbunden werden.

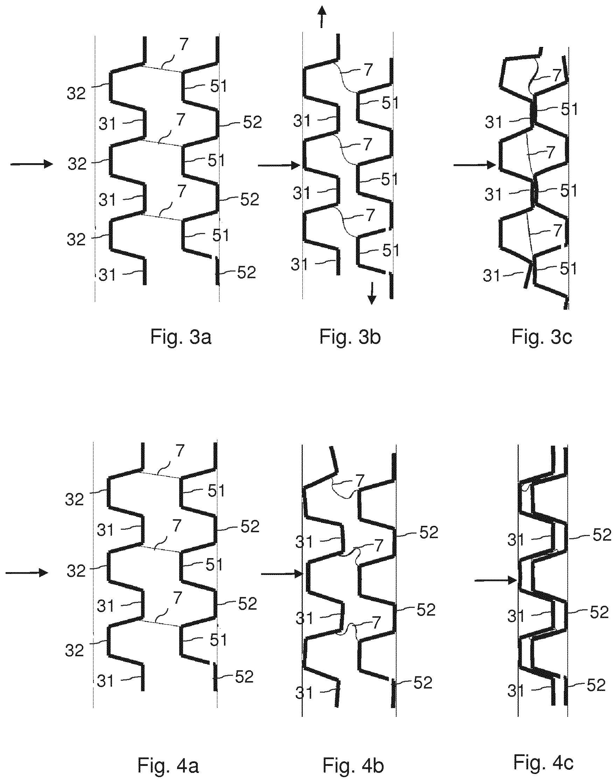

In Figur 3a und 4a ist eine kleinste Einheit - bezogen auf eine Anzahl an Lagen - der Deformationstruktur 1 dargestellt. Die kleinste Einheit hat die erste Lage 3 und die zweite Lage 5, die über die verformbaren Stege 7 miteinander verbunden sind. Im Folgenden wird anhand der kleinsten Einheit eine Funktion der Deformationsstruktur 1 unter Bezugnahme auf Figuren 3a bis 3c und Figuren 4a bis 4c bei unterschiedlichen Kollisionslastfällen beschrieben.

Bei einer Frontalkollision des Kraftfahrzeugs mit einem Gegenstand oder eine Person wirkt eine Last, oder zumindest eine Resultierende einer Kollisionslast, in Fahrzeuglängsrichtung auf die Deformationsstruktur 1, wobei die erste Lage 3 unter Verformung der Verbindungsstege 7 in Richtung der zweiten Lage 5 verschoben wird. In der Ausgangslage der Deformationsstruktur 1, welche in Figuren 3a und 4a gezeigt ist, liegen sich die Vorsprünge 31 der ersten Lage 3 und die Vertiefungen 52 der zweiten Lage 5 sowie die Vertiefungen 32 der ersten Lage 3 und die Vorsprünge 51 der zweiten Lage 5 gegenüber. Wären die erste Lage 3 und die zweite Lage 5 nicht über die Verbindungsstege 7 miteinander verbunden, könnten die erste Lage 3 und die zweite Lage 5 von dieser Ausgangslage ungehindert aufeinander zu und ineinander verschoben werden.

Figuren 3b und 3c zeigen einen Kollisionslastfall bei einem niedrigen Kollisionsimpuls, der beispielsweise bei einer Kollisionsgeschwindigkeit des Kraftfahrzeugs von unter einer vorgegebenen Kollisionsgeschwindigkeit von 20 km/h stattfindet und der für einen Fußgängerschutz weniger relevant ist. Figuren 4b und 4c zeigen einen Kollisionslastfall bei einem hohen Kollisionsimpuls, der beispielsweise bei einer Kollisionsgeschwindigkeit des Kraftfahrzeugs von gleich oder oberhalb der vorgegebenen Kollisionsgeschwindigkeit 20 km/h stattfindet. Die vorgegebene Kollisionsgeschwindigkeit ist hierbei lediglich beispielhaft genannt und kann auch einen anderen Wert aufweisen.

Zunächst ist unter Bezugnahme auf Figuren 3b bis 3c eine Funktion der Deformationsstruktur 1 bei der Kollision des Kraftfahrzeugs mit der Kollisionsgeschwindigkeit von weniger als 20 km/h beschrieben.

Während in Figur 3a der Zustand vor Beginn der Verformung der Deformationsstruktur 1 gezeigt ist, zeigt Figur 3b schließlich eine beginnende Verformung der Verbindungsstege 7 unter der Kollisionslast mit dem niedrigen Kollisionsimpuls. Die Verbindungsstege 7 sind so angeordnet und gestaltet, dass bei dem niedrigen Kollisionsimpuls die erste Lage 3 und die zweite Lage 5 eine Schwenkbewegung durchlaufen, während sie zueinander gedrückt werden. Die Verbindungsstege 7 bilden dabei gegebenenfalls ein sogenanntes Filmgelenk, das die Schwenkbewegung unterstützt bzw. die Schwenkbahn definiert. Mit dieser Schwenkbewegung erfolgt zusätzlich zu der Bewegung aufeinander zu eine parallele Verschiebung der ersten Lage 3 und der zweiten Lage 5 gegeneinander. Dabei gelangen die Vorsprünge 31 der ersten Lage 3 in zu den Vorsprüngen 52 der zweiten Lage 5 gegenüberliegende Stellung, wie in Fig. 3b gezeigt ist. In Figur 3c ist gezeigt, wie die Oberseiten bzw. Stirnseiten der Vorsprünge 31 der ersten Lage 3 in Kontakt mit den Oberseiten bzw. Stirnseiten der Vorsprünge 51 der zweiten Lage 5 gelangen. Eine weitere Verformung der Deformationsstruktur 1 in die Kollisionsrichtung bzw. Deformationsrichtung kann dann lediglich unter Verformung der Vorsprünge 31 und 51 erfolgen, die bei einem verhältnismäßig hohen Kraftniveau erfolgt. Hierdurch hat die Deformationsstruktur 1 in dem Kollisionsgeschwindigkeitsbereich unterhalb von ca. 20 km/h eine verhältnismäßig hohe Steifigkeit.

Damit überträgt im Fall der langsamen Kollisionsgeschwindigkeit die Deformationsstruktur 1 je nach Kollisionslastniveau die Kollisionslast direkt auf eine dahinter liegende Struktur des Kraftfahrzeugs, d.h. den Stoßfängerquerträger, oder die einzelnen Lagen 3, 5 der Deformationsstruktur 1 versagen nach Aufeinandertreffen der Vorsprünge 31, 51 spröde durch Brechen oder/und versagen durch plastische Verformung auf einem höheren Lastniveau als bei der schnelleren Kollisionsgeschwindigkeit.

Insbesondere kann die Deformationsstruktur 1 derart ausgelegt sein, dass sie bei Kollisionsgeschwindigkeiten von beispielsweise weniger als 4 km/h eine Kollisionslast ohne Versagen der Deformationselemente 3 auf die Crashstruktur übertragen kann. D.h. die Verbindungsstege 7 werden lediglich elastisch verformt und die Struktur der Lagen 3 und 5 selbst versagt nicht. Dies ist vorteilhaft, wenn bei sogenannten Parkremplern oder dergleichen kein reparaturbedürftiger Schaden am Kraftfahrzeug entstehen soll, und hat einen Einfluss auf beispielsweise eine Versicherungseinstufung des Kraftfahrzeugs.

Im Folgenden ist unter Bezugnahme auf Figuren 4b und 4c eine Funktion der Deformationsstruktur 1 bei der Kollision des Kraftfahrzeugs mit der Kollisionsgeschwindigkeit gleich oder größer als 20 km/h beschrieben.

Während in Figur 4a der Zustand vor Beginn der Verformung der Deformationsstruktur 1 gezeigt ist, zeigt Figur 4b schließlich eine beginnende Verformung der Verbindungsstege 7 unter der Kollisionslast mit dem hohen Kollisionsimpuls. Die Verbindungsstege 7 sind so angeordnet und gestaltet, dass diese bei dem hohen Kollisionsimpuls versagen bzw. mehr oder weniger zusammengefaltet werden, so dass diese keine Filmgelenkwirkung entfalten können. Die Massenträgeheit der ersten Lage 3 ist bei dem hohen Kollisionsimpuls dabei insbesondere so groß, dass die Verbindungsstege 7 keine seitliche Ausweichbewegung der ersten Lage 3 und der zweiten Lage 5 bewirken bzw. unterstützen können. Hierdurch werden die Vorsprünge 31 der ersten Lage 3 und die Vertiefungen 52 der zweiten Lage 5 direkt aufeinander zubewegt. Im weiteren Verlauf der Kollision und Verformung der Deformationsstruktur 1, der in Fig. 4c gezeigt ist, werden die Vorsprünge 31 der ersten Lage 3 vollständig in die Vertiefungen 52 der zweiten Lage 5 geschoben. Ebenso werden die Vorsprünge 51 der zweiten Lage 5 vollständig in die Vertiefungen 32 der ersten Lage 3 geschoben. Da hierzu im Wesentlichen keine Verformung der Struktur der ersten Lage 3 oder der zweiten Lage 5 erforderlich ist, erfolgt eine Verformung der Deformationstruktur 1 (zumindest bis zu dem in Fig. 4c gezeigten Zustand) auf einem verhältnismäßig niedrigen Kraftniveau.

Dies ist insoweit vorteilhaft, da es ab der Kollisonsgeschwindigkeit von ungefähr 20 km/h wichtig ist, dass das Frontend des Kraffahrzeugvorderwagens, und insbesondere die Stoßfängerverkleidung in Verbindung mit der Deformationsstruktur 1 hinreichend weich bei einem geringen Verformungskraftniveau zum Schutz eines Fußgängers reagiert. Ist der Kollisionsgegner ein Fußgänger wirkt demnach bei einer Geschwindigkeit von ungefähr 20 km/h und mehr vorteilhaft eine verhältnismäßig geringe Kraft auf den Fußgänger.

Insgesamt kann durch die erfindungsgemäße Deformationsstruktur 1 somit ein Zielkonflikt gelöst werden, der zum Einen bei sehr niedrigen Kollisionsgeschwindigkeiten, die für den Fußgängerschutz nicht relevant sind, eine hinreichend große Steifigkeit des Deformationsstruktur 1 bzw. ein hinreichend großes Verformungskraftniveau der Deformationsstruktur 1 ermöglicht und bei einer etwas höheren Kollisionsgeschwindigkeit, die für den Fußgängerschutz relevant ist, einen hinreichenden Fußgängerschutz durch ein niedriges Verformungskraftniveau gewährleistet.

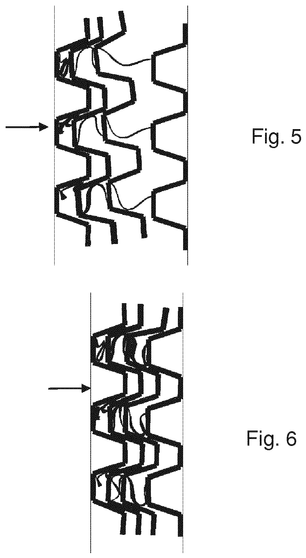

In Figuren 5 und 6 ist die Deformationsstruktur 1 entsprechend Fig. 2 mit den vier über Verbindungsstege 7, 7' verbundenen Lagen 3, 5, 3, 5 bei der Kollision mit einem hohen Kollisionsimpuls analog der Figuren 3b und 3c gezeigt.

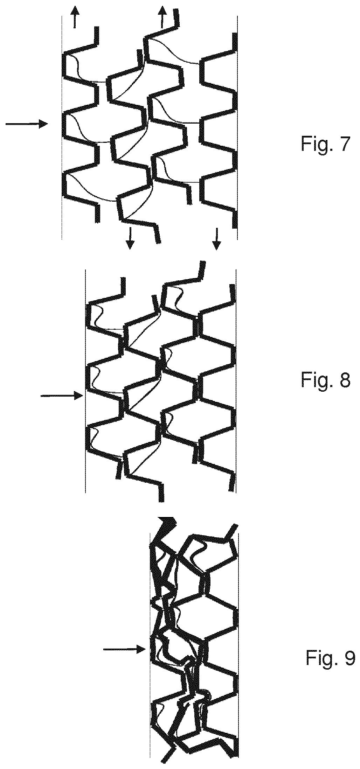

In Figuren 7 und 8 ist die Deformationsstruktur 1 entsprechend Fig. 2 mit den vier über Verbindungsstege 7, 7' verbundenen Lagen 3, 5, 3, 5 bei der Kollision mit dem niedrigen Kollisionsimpuls analog der Figuren 4b und 4c gezeigt. Ferner ist in Fig. 9 der Zustand eines plastischen und/oder spröden Versagens der Struktur der einzelnen Lagen 3, 5, 3, 5 ausgehend von dem Zustand in Fig. 8 gezeigt.

Entsprechend der Figuren 5, 6, 7, 8 und 9 ist zu sehen, dass das Funktionsprinzip der Deformationsstruktur 1, das hinsichtlich der kleinsten Einheit unter Bezugnahme auf Figuren 3a, 3b, 3c, 4a, 4b und 4c im Einzelnen beschrieben ist, auch mit einer größeren Anzahl als zwei Lagen funktioniert und die Deformationsstruktur 1 je nach Anwendungsfall eine beliebige Anzahl von Lagen aufweisen kann. Ebenso können die Lagen der Deformationsstruktur 1 eine beliebige Anzahl von Vorsprüngen und Vertiefungen aufweisen.

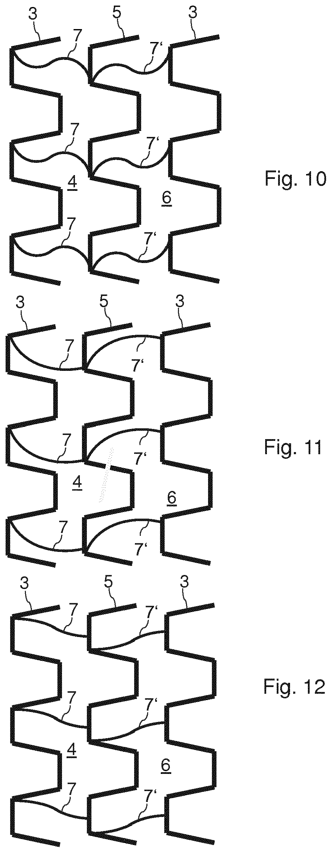

In Figuren 10, 11 und 12 sind weiter Ausführungsbeispiele der Deformationsstruktur 1 gezeigt, die sich von dem vorhergehend beschriebenen Ausführungsbeispiel durch eine geometrische Gestaltung der Verbindungsstege 7, 7' unterscheidet. Es sind darüber hinausgehend noch viele weitere geometrische Gestaltungen der Verbindungsstege denkbar. Die Verbindungsstege 7, 7' sind jeweils so gestaltet, dass diese ein Verschwenken benachbarter Lagen 3, 5 zueinander ermöglichen. Ferner ist es vorteilhaft, wenn die Verbindungsstege 7, 7' zwischen der ersten Lage 3 und der zweiten Lage 5, d.h. einem ersten Lagenzwischenraum 4, sowie die Verbindungsstege 7, 7' zwischen der zweiten Lage 5 und der dritte Lage 3, d.h. einem zweiten Lagenzwischenraum 6, derart unterschiedliche gestaltet ist, dass ein Verschwenken der benachbarten Lagen 3, 5 in zueinander entgegengesetzte Richtungen erfolgt. Mit anderen Worten sind die Verbindungstege 7, 7' in benachbarten Lagenzwischenräumen 4, 6 entgegengesetzt orientiert, so dass sie ein Verschwenken benachbarter Lagenpaare 3, 5 und 5, 3 in entgegengesetzte Richtungen begünstigen.

## Patentansprüche

1. Deformationsstruktur (1) mit zumindest einer ersten Lage (3) und einer zweiten Lage (5), die in eine Deformationsrichtung zueinander beabstandet und zueinander verlagerbar angeordnet sind, wobei die erste Lage (3) und die zweite Lage (5) komplementäre Vorsprünge (31, 51) und Vertiefungen (32, 52) aufweisen, die derart ausgebildet sind, dass die Vorsprünge (31) der ersten Lage (3) und Vertiefungen (52) der zweiten Lage (5) sowie die Vorsprünge (51) der zweiten Lage (5) und Vertiefungen (32) der ersten Lage (3) ineinander eintauchbar sind, **dadurch gekennzeichnet, dass** die erste Lage (3) und die zweite Lage (5) über verformbare Stegelemente (7, 7') derart miteinander verbunden sind, dass bei einem hohen Impuls in Deformationsrichtung die Vorsprünge (31) der ersten Lage (3) in Vertiefungen (52) der zweiten Lage (5) sowie Vorsprünge (51) der zweiten Lage (5) in Vertiefungen (32) der ersten Lage (3) eintauchen, so dass eine Verformung der Deformationsstruktur (1) in Deformationsrichtung auf einem niedrigen Kraftniveau erfolgt, und bei einem niedrigen Impuls in Deformationsrichtung die Vorsprünge (31) der ersten Lage (3) auf die Vorsprünge (51) der zweiten Lage (5) treffen, so dass eine Verformung der Deformationsstruktur (3) in Deformationsrichtung auf einem hohen Kraftniveau erfolgt.

2. Deformationsstruktur nach Patentanspruch 1, wobei die erste Lage (3) und die zweite Lage (5) durch Verformung der Stegelemente (7, 7') ferner in eine Richtung parallel zueinander verlagerbar sind.

3. Deformationsstruktur nach Patentanspruch 1 oder 2, wobei die Stegelemente (7, 7') bei dem hohen Kollisionsimpuls spröde und/oder plastisch versagen und wobei die Stegelemente (7, 7') bei dem niedrigen Kollisionsimpuls entsprechend einem Filmscharnier wirken.

4. Deformationsstruktur nach einem der Patentansprüche 1 bis 3, wobei die Stegelemente (7, 7') als Wand-/Flächenelemente ausgebildet sind, die sich über eine gesamte Breite der ersten Lage (3) und der zweiten Lage (5) erstrecken.

5. Deformationsstruktur nach einem der Patentansprüche 1 bis 4, wobei die erste Lage (3) und die zweite Lage (5) im Wesentlichen identisch ausgebildet sind.

6. Deformationsstruktur nach einem der Patentansprüche 1 bis 5, wobei die Vorsprünge (31) der ersten Lage (3) und die Vertiefungen (52) der zweiten Lage (5) sowie die Vertiefungen (32) der ersten Lage (3) und die Vorsprünge (51) der zweiten Lage (5) in einer Ausgangslage der Deformationsstruktur (1) einander gegenüberliegend angeordnet sind.

7. Deformationsstruktur nach einem der Patentansprüche 1 bis 6, wobei die Deformationsstruktur (1) aus einem Kunststoffmaterial, insbesondere einstückig, ausgebildet ist.

8. Deformationsstruktur nach einem der Patentansprüche 1 bis 7, wobei die erste Lage (3) und die zweite Lage (5) jeweils in Form einer gewellten Platte ausgebildet sind und wobei die Vorsprünge (31, 51) und Vertiefungen (32, 52) insbesondere eine trapezförmige Gestalt aufweisen.

9. Deformationsstruktur nach einem der Patentansprüche 1 bis 8, mit einer Vielzahl von Lagen (3, 5), wobei zwei benachbarte Lagen jeweils eine erste Lage (3) und eine zweite Lage (5) bilden.

10. Deformationsstruktur nach Patentanspruch 9, wobei die Verbindungsstege (7, 7') in einem Lagenzwischenraum (4, 6) zweier benachbarter Lagen (3, 5) angeordnet sind und die Verbindungsstege (7, 7') zweier benachbarter Lagenzwischenräume (4, 6) hinsichtlich ihrer Verlagerungswirkung in entgegengesetzte Richtungen orientiert sind.

11. Fußgängerschutzvorrichtung für ein Kraftfahrzeug mit einer Deformationsstruktur (1) nach einem der Patentansprüche 1 bis 10, wobei die Deformationsstruktur (1) zwischen einem Fahrzeugaußenhautelement, insbesondere einer Stoßfängerverkleidung, und einem Karosserieträgerelement, insbesondere einem Stoßfängerquerträger, angeordnet ist.

## Claims

1. A deformation structure (1) having at least a first layer (3) and a second layer (5) which are arranged in a deformation direction spaced apart from each other and displaceably relative to each other, wherein the first layer (3) and the second layer (5) have complementary projections (31, 51) and indentations (32, 52) which are formed such that the projections (31) of the first layer (3) and indentations (52) of the second layer (5) and also the projections (51) of the second layer (5) and indentations (32) of the first layer (3) can be inserted into each other,
**characterised in that**
the first layer (3) and the second layer (5) are connected together by way of deformable web elements (7, 7') such that in the event of a high impulse in the deformation direction the projections (31) of the first layer (3) enter into indentations (52) of the second layer (5) and also projections (51) of the second layer (5) enter into indentations (32) of the first layer (3), so that deformation of the deformation structure (1) in the deformation direction takes place at a low level of force, and in the event of a low impulse in the deformation direction the projections (31) of the first layer (3) strike the projections (51) of the second layer (5), so that deformation of the deformation structure (3) in the deformation direction takes place at a high level of force.

2. A deformation structure according to Claim 1, wherein the first layer (3) and the second layer (5) are further displaceable in a direction parallel to each other by deformation of the web elements (7, 7').

3. A deformation structure according to Claim 1 or Claim 2, wherein the web elements (7, 7') in the event of the high collision impulse undergo brittle and/or plastic failure and wherein the web elements (7, 7') in the event of the low collision impulse act in a manner corresponding to a film hinge.

4. A deformation structure according to one of Claims 1 to 3, wherein the web elements (7, 7') are designed as wall/surface elements which extend over an entire width of the first layer (3) and of the second layer (5).

5. A deformation structure according to one of Claims 1 to 4, wherein the first layer (3) and the second layer (5) are formed substantially identically.

6. A deformation structure according to one of Claims 1 to 5, wherein the projections (31) of the first layer (3) and the indentations (52) of the second layer (5) and also the indentations (32) of the first layer (3) and the projections (51) of the second layer (5) in a starting position of the deformation structure (1) are arranged lying opposite each other.

7. A deformation structure according to one of Claims 1 to 6, wherein the deformation structure (1) is formed from a plastics material, especially in one piece.

8. A deformation structure according to one of Claims 1 to 7, wherein the first layer (3) and the second layer (5) are in each case in the form of a corrugated plate and wherein the projections (31, 51) and indentations (32, 52) have especially a trapezoidal form.

9. A deformation structure according to one of Claims 1 to 8, with a large number of layers (3, 5), wherein two adjacent layers in each case form a first layer (3) and a second layer (5).

10. A deformation structure according to Claim 9, wherein the connecting webs (7, 7') are arranged in a layer intermediate space (4, 6) of two adjacent layers (3, 5) and the connecting webs (7, 7') of two adjacent layer intermediate spaces (4, 6) are oriented in opposite directions with regard to their displacement action.

11. A pedestrian protection device for a motor vehicle with a deformation structure (1) according to one of Claims 1 to 10, wherein the deformation structure (1) is arranged between an outer vehicle skin element, especially a bumper fascia, and a vehicle body member element, especially a bumper transverse member.

## Revendications

1. Structure de déformation (1) ayant au moins une première couche (3) et une seconde couche (5) qui sont situées à distance l'une de l'autre dans une direction de déformation et peuvent être déplacées l'une par rapport à l'autre, la première couche (3) et la seconde couche (5) ayant des saillies (31, 51) et des renfoncements (32, 52) complémentaires qui sont réalisés de sorte que les saillies (31) de la première couche (3) et les renfoncements (52) de la seconde couche (5) ainsi que les saillies (51) de la seconde couche (5) et les renfoncements (32) de la première couche (3) puissent pénétrer les uns dans les autres,
**caractérisée en ce que**
la première couche (3) et la seconde couche (5) sont reliées par des entretoises déformables (7, 7') de sorte que, en présence d'une forte impulsion dans la direction de déformation les saillies (31) de la première couche (3) pénètrent dans des renfoncement (52) de la seconde couche (5) et que des saillies (51) de la seconde couche (5) pénètrent dans des renfoncements (32) de la première couche (3) de façon à obtenir une déformation de la structure de déformation (1) dans la direction de déformation à un faible niveau de force, et qu'en présence d'une faible impulsion dans la direction de déformation les saillies (31) de la première couche (3) percutent les saillies (51) de la seconde couche (5) de façon à obtenir une déformation de la structure de déformation (1) dans la direction de déformation à un niveau de force élevé.

2. Structure de déformation conforme à la revendication 1,
dans laquelle la première couche (3) et la seconde couche (5) peuvent en outre être déplacées par déformation des entretoises (7, 7') parallèlement l'une à l'autre.

3. Structure de déformation conforme à la revendication 1 ou 2,
dans laquelle en présence de la forte impulsion de collision, les entretoises (7, 7') s'affaissent en se cassant et/ou plastiquement, et en présence de la faible impulsion de collision les entretoises (7, 7') agissent à la manière d'une charnière film.

4. Structure de déformation conforme à l'une des revendications 1 à 3, dans laquelle les entretoises (7, 7') sont réalisés sous la forme d'éléments de paroi/de surface qui s'étendent sur la totalité de la largeur de la première couche (3) et de la seconde couche (5).

5. Structure de déformation conforme à l'une des revendications 1 à 4, dans laquelle la première couche (3) et la seconde couche (5) sont essentiellement identiques.

6. Structure de déformation conforme à l'une des revendications 1 à 5, dans laquelle les saillies (31) de la première couche (3) et les renfoncements (52) de la seconde couche (5) ainsi que les renfoncements (32) de la première couche (3) et les saillies (51) de la seconde couche (5) sont situés en regard dans la position initiale de la structure de déformation (1).

7. Structure de déformation conforme à l'une des revendications 1 à 6, réalisée en particulier en une seule pièce en un matériau synthétique.

8. Structure de déformation conforme à l'une des revendications 1 à 7, dans laquelle la première couche (3) et la seconde couche (5) sont réalisées chacune sous la forme d'une plaque ondulée et les saillies (31, 51) et les renfoncements (32, 52) ont en particulier une configuration trapézoïdale.

9. Structure de déformation conforme à l'une des revendications 1 à 8, comprenant un ensemble de couches (3, 5), deux couches voisines formant respectivement une première couche (3) et une seconde couche (5).

10. Structure de déformation conforme à la revendication 9,
dans laquelle les entretoises (7, 7') sont situées dans l'intervalle (4, 6) entre deux couches (3, 5) voisines, et les entretoises (7, 7') des intervalles (4, 6) entre deux couches voisines sont orientées dans des directions opposées concernant leur action de déformation.

11. Dispositif de protection des piétons destiné à un véhicule comportant une structure de déformation (1) conforme à l'une des revendications 1 à 10,
dans lequel la structure de déformation (1) est installée entre un élément de l'enveloppe externe du véhicule, en particulier un habillage de pare-chocs et un élément de support de carrosserie en particulier un support transversal de pare-chocs.
